# EUROPEAN PATENT APPLICATION

(11) **EP 3 530 835 A1**
(43) Date of publication of application: **28.08.2019**
(21) Application number: 18382106.5
(22) Date of filing: 22.02.2018
(51) Int. Cl.: E04F 10/00, E04F 10/06

(54) **BELT TENSIONING CARRIAGE DEVICE FOR MOVING AN AWNING AND MOVEMENT SYSTEM OF THE AWNING**

(71) Applicant: Gaviota Simbac, S.L., 03630 Sax Alicante (ES)
(72) Inventor: Guillen Chico, Francisco Vicente, 03630 Sax (Alicante) (ES); Ballester Pérez, Ignacio, 03630 Sax (Alicante) (ES); Alejos Montijano, Juan Antonio, 03630 Sax (Alicante) (ES)
(74) Representative: Carlos Hernando, Borja

(57) **Abstract**

The invention relates to a belt tensioning carriage device for moving an awning, used to make the teethed movement belts of an awning installed in a pergola tense, in which the awning slides almost horizontally along lateral guides, such that the belt and the tensioning carriage device slide. The invention also relates to a movement system of an awning along the guides of a pergola.

## Description

### DESCRIPTION OF THE INVENTION

The present invention, a belt tensioning carriage device for moving an awning, relates to a device used to make the movement belts of an awning installed in a pergola tense, in which the awning slides almost horizontally along lateral guides, such that the belt and the tensioning carriage device slide. The distance between the guides of the pergola is determined by the width of the awning. The awning is rolled and unrolled around a motor-driven shaft located in one end of the lateral guides. The invention also relates to a movement system of an awning along the guides of a pergola.

The field of application of the present invention is the sector of enclosures, and specifically enclosures with movable covering elements such as, for example, pergolas with an awning, among others.

### DESCRIPTION OF THE STATE OF THE ART

In the state of the art, many devices that are used to move awnings arranged on different structures are known, such that the movement means of the tarpaulins that make up the awnings adapt to the specific strucure on which they are installed. The tarpaulin usually moves along two guides located on both sides thereof. To move the tarpaulin of the awning, there is usually a drive shaft that acts as a rolling shaft of the tarpaulin, such that it rolls and unrolls the tarpaulin along the guides with means that connect the drive shaft to the horizonta bar of the awning.

One solution for moving awnings on pergolas, where the awning is arranged almost horizontally, consists of moving the bar of the awning by means of toothed belts preferably arranged in both lateral guides of the tarpaulin, such that the drive shaft moves the toothed belts by moving the bar of the awning in one direction or another, extending or retracting the tarpaulin. In these movement systems, it is useful that the toothed belt is made tense in order to ensure correct operation of the system and to prevent noises derived from the striking of the slack tarpaulin against the guide.

Likewise, in the existing movement systems, means for draining water in the case that rains falls on the awning are not envisaged.

Therefore, some of the objectives of the present invention include a movement system and a tensioning carriage device that enables movement of the awning or tarpaulin by minimizing the striking of the toothed belt against the structure that houses it, and therefore the noise, while at the same time enabling the water that has fallen on the awning or tarpaulin to be removed.

### DESCRIPTION

The first object of the present invention, according to claim 1, a toothed belt tensioning carriage device for moving an awning along the lateral guide of a pergola, such that it enables the tension of the toothed belt to be maintained when joining the ends that form the same.

Said tensioning carriage device comprises:
- A base support body with a substantially rectangular configuration and with first guide and support means on one end of the base body and second guide and support means on one side of said base body, also having at least one transverse shaft for at least one wheel,
- A first movable support body, that can be moved with respect to the base support body, with a first groove to house the belt and with guide means, preferably with pressure, complementary to the guide means of the base support body,
- A second movable support body, that can be moved with respect to the base support body, with a second groove to house the belt and with guide means that are complementary to the guide means of the base support body, this second groove being at the same height with respect to the transverse shaft of the base body as the first movable groove of the first movable support body,
- Securing means arranged between the base support body and the second movable support body and securing means arranged between the base support body and the second movable support body, and
- A coupling body on which the base support body is secured and which is also secured to the load bar of the awning by the side opposite the securing side of the base support carriage.

The support bodies of the tensioning carriage device, as well as the coupling body, are preferably constructed of a plastic material, while the profiles of the lateral guides along which the carriages are the load bar of the awning move are preferably made of aluminum. The securing means, which are preferably screws, are preferably made of steel.

To install the above device, it is first necessary to couple the different components to the base support body, and to do so, the wheels, preferably two, are connected to the base body and the coupling body by means of suitable retention means through the transverse shaft; these wheels are those on which the carriage slides along the guide. Subsequently, the movable support bodies are placed on the guide means of the base body, hiding the securing means of the wheels that cross the base support body, and are connected together by means of the securing means. Next, the ends of the toothed belt are inserted into the guide grooves of the movable support bodies and with the help of the securing means, the movable support bodies are moved closer together or further apart by making them slide with respect to the guide means of the base support body, making the toothed belt tense or slack.

The coupling body is placed on the inner side of the guide of the pergola while the movable support bodies are on the outer side and are seen.

To ensure that the toothed belt does not come out of the grooves in the first and second movable support bodies, the profile that forms the lateral guide along which the tensioning carriage device moves comprises an inner wall that prevents said belt from coming out of the grooves where they are inserted with pressure. In any case, the grooves of the movable support bodies can incorporate, if necessary, means for retaining the belt in said grooves and preventing the belt from coming out of the grooves, as well as means that help make the toothed belt tense. These means would mainly be mechanical retention means that attaches the toothed belt to the movable support bodies.

The coupling body, to which the base support body is attached via the retention means, is formed by a mortise with a substantially rectangular lateral wall and has grooves on said wall that are used to remove the water that falls on the tarpaulin of the awning. This water from the tarpaulin falls to the load bar of the awning, crosses the grooves existing on the coupling body of the tensioning carriage device and is directed to the guide profile of the pergola where it is removed from the awning.

A second object of the invention, acording to claim 6, is a movement system of an awning along the lateral guides of a pergola comprising:
- At least two tensioning carriage devices according to the first object of the present invention,
- At least one drive shaft of an awning with a tensioning system of the tarpaulin.
- A lateral movement guide where a tensioning carriage device is arranged in each one, and
- A toothed belt in each guide and connected to each carriage.

Based on the above, the tensioning carriage device is inserted into the profile the forms the lateral guide of the awning, the section of which is designed to hold the tensioning carriage device, thus ensuring correct sliding of the tensioning carriage device inside the profile.

### DESCRIPTION OF THE DRAWINGS

The present invention includes the following figures that show, but are not limited to, several embodiments of the invention object of the present patent application.
Figure 1 shows a top view of an awning of an assembly of a pergola with the different components of the present invention.
Figure 2 shows a detailed view of a corner of said awning.
Figure 3 shows a perspective view of a device according to the present invention joined to the bar of the awning.
Figure 4 shows an exploded view of the device of the previous figure.
Figure 5 shows a side view of the device.
Figure 6 shows a cross section of a device along a cutting plane AA shown in Figure 5.
Figure 7 shows a first perspective view of a tensioning carriage device wherein the movable support bodies are separated.
Figure 8 shows a second perspective view of a tensioning carriage device wherein the movable support bodies are separated.
Figure 9 shows the perspective view of Figure 8 with the movable support bodies joined.
Figure 10 shows a view from a cross section of the bar of the awning toward a lateral guide.
Figure 11 shows a side view of a tensioning carriage device installed in a lateral guide.
Figure 12 shows a perspective view of a tensioning carriage device installed in a lateral guide of an awning with the bar of the awning.
Figure 13 shows a front view of the profile that forms the lateral guide into which the tensioning carriage device object of the invention is inserted.

### DESCRIPTION OF A PREFERRED EMBODIMENT

Next, a description of the invention according to the figures included in the present invention will provided.

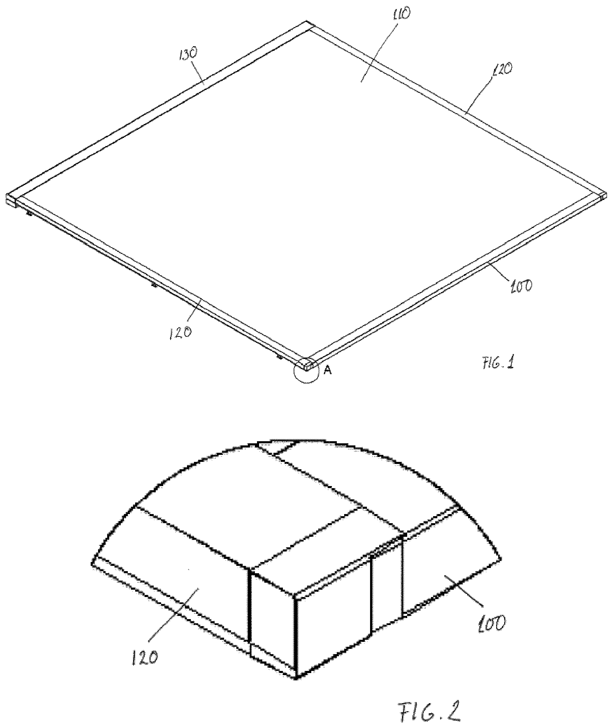

Figure 1 shows a top view of a tarpaulin 110 that forms the extended awning of a pergola, where the two lateral guides 120 and the horizontal bar of the awning 100, moved by the tensioning carriage devices 200, are shown, and which moves along the guides 120. The tarpaulin 110 of the awning is retracted in a motor-driven shaft 130 located in one end of the lateral guides 120.

Figure 2 shows a detailed view of the joint between the bar of the awning 100 and one of the movement guides 120, where it is shown how the bar of the awning 100, and therefore the tensioning carriage device 200, reaches the end of the lateral guide 120.

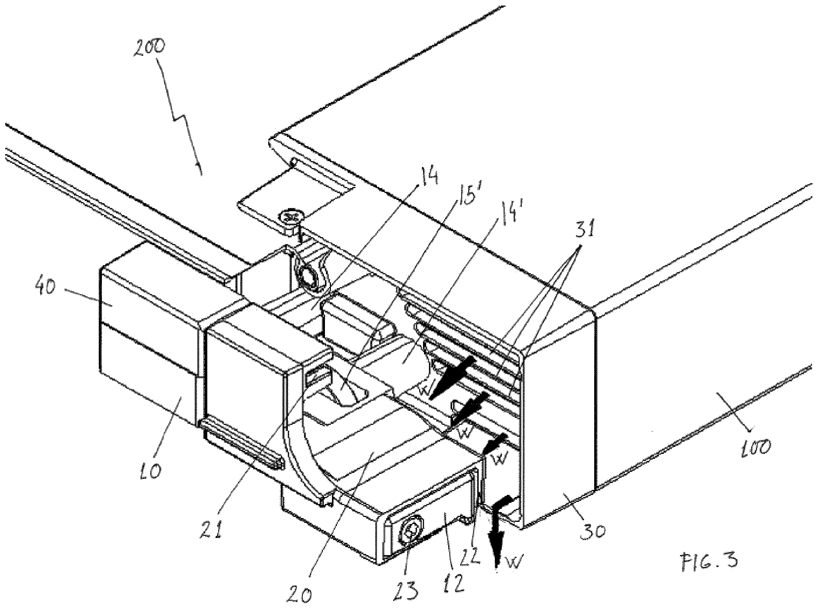

Figures 3 to 9 show different views of a tensioning carriage device 200 according to the present invention. Specifically, Figure 3 shows a tensioning carriage device 200, object of the present invention, coupled to a bar of the awning 100. As can be seen in this Figure 3 and the following figures, said tensioning carriage 200 has a base support body 10 on which two movable support bodies 20, 40 are arranged, a first movable support body 20 and a second movable support body 40, one for each end of the base support 10 via guide means 11, 12 arranged in the support base 10, and which have complementary guide means 22, 42 on the movable support bodies 20, 40. The guide means 22 of the first movable support body 20 are arranged on the guide means in the base support body 10 preferably with pressure. On said base support 10, there is at least one wheel 15, 15', preferably two wheels, that cross said base support 10 by means of transverse shafts 14, 14'. Retention means, preferably screws 13, 13', are inserted into said transverse shafts 14, 14', and they couple to the coupling body 30 of the tensioning carriage device 200 with the bar of the awning 100. The movable support bodies 20, 40 each have a groove 21, 41 for insertion therein of the toothed belt 150 (shown in the figures without teeth) which will cause the tensioning carriage 200 to move when the drive shaft 130 is started. Specifically, an end of the belt 150 will be inserted into the each one of the two grooves 21, 41, such that the toothed belt 150 will travel a path along the lateral movement guides 120 that goes form the end of the lateral guide where the drive shaft 130 is located with a first toothed pulley to the opposite end of the lateral guide where there is a second toothed pulley 160, to then return to said first toothed pulley. Since the toothed belt 150 does not establish a closed path, but rather forms said path via the joining of two free ends of the belt 150, it needs joining means of said free ends that allow the movement to be transmitted to the carriage when the pulleys 160 rotate. The correct operation and movement of the tensioning carriage that pulls the bar of the awning 100 depends on the tension of the toothed belt 150.

To make the toothed belt 150 tense and thus achieve the correct operation and of the assembly of the awning, the movable support bodies 20, 40 have securing means 23, 43 arranged between each of the movable supports 20, 40 and the base support body 10. These securing means 23, 43 are used to adjust the distance between the base support body 10 and both movable support bodies 20, 40, such that they also adjust the distance between both movable supports 20, 40. Thus, when increasing the distance betwen the movable support bodies 20, 40, the grooves 21, 41 separated from each other and the tension of the toothed belt 150 decreases, while when moving both movable support bodies 20, 40 together, the tension of the toothed belt 150 increases.

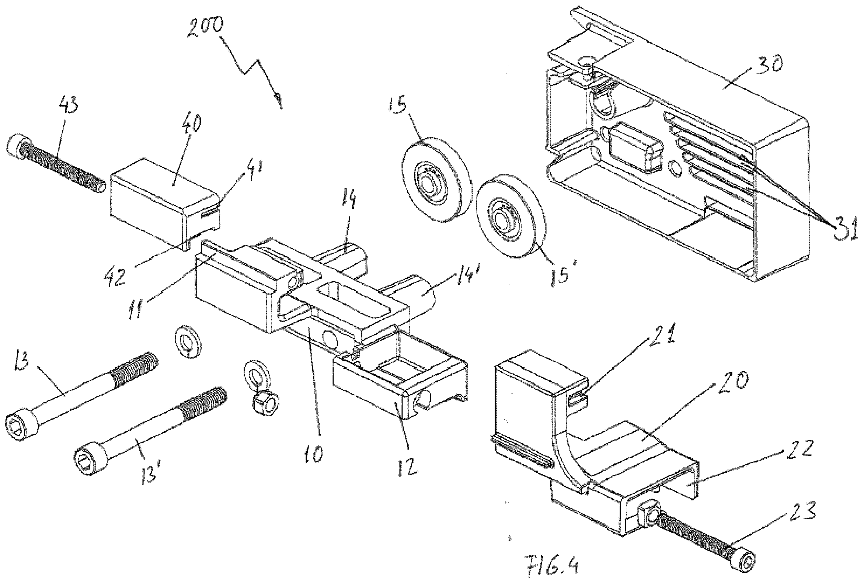

Figure 4 shows an exploded view of the tensioning carriage device 200 in which the different elements that make up the aforementioned tensioning carriage 200 are shown. This figure also shows the geometry of the different elements and how they are installed in the base support body 10. Said base support 10 has, in one of the two ends thereof, first guide means 12 on which the guide means 22 of the first movable support body 20 are adjusted with pressure and are complementary to each other. Said first movable support body 20 has an element 24 that interferes with the support body 10 in a way that by means of the securing means 23, preferably a combined screw with nuts, it is possible to vary the distance between said movable support body 20 and the base support body 10. Said movable support body 20 has a groove 21 above the guide means 12, 22 into which the toothed belt 150 is inserted.

The opposite end of the base support body 10 has second guide means 11, basically consisting of recesses 11 on which there will be the guide means 42 of the second movable support 40. Like in the case of the first movable support body 20, the second movable support body 40 has an element 44 that interferes with the base support body 10 in a way that by means of the securing means 43, preferably a combined screw with nuts, it is possible to vary the distance between said second movable support body 40 and the base support body 10. Said movable support body 40 has a groove 41 above the guide means 11, 42 into which the toothed belt 150 is inserted.

According to the previous structure, and when the toothed belt 150 is found inserted in the guides 41, 21 of the movable support bodies 20, 40, acting on the securing means 23, 43, the tension of said belt 150 is increased or decreased. The movable support devices 20, 40 move along a first shaft x that is parallel to the movement shaft of the tensioning carriage device 200 along the lateral moving guide 120.

The base support body 10 also has two transverse shafts 14, 14' that cross it, formed by two protrusions perpendicular to the movement shaft x of the movable support bodies 20, 40, and each having a through channel. Said through channels are crossed by securing means 13, 13' and are retained in a coupling body 30. There is a wheel 15, 15' between said coupling body 30 and the perpendicular protrusions 14, 14' of the base support body 10 so that the tensioning carriage device 200 rolls inside of the lateral guide 120.

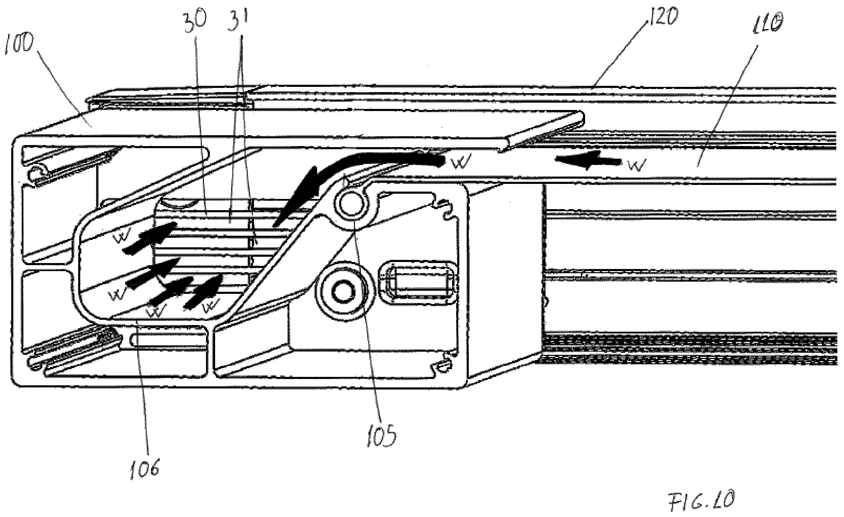

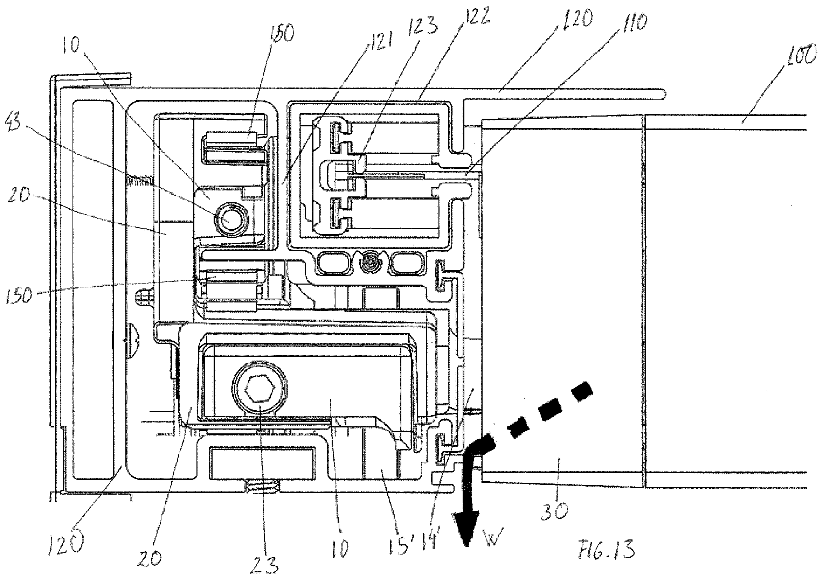

Said coupling body 30 has grooves 31 for removing the water W that can fall or accumulate on the tarpaulin 110 of the awning, such that the water W falls by gravity from the tarpaulin 100 to the load bar of the awning 100 and crosses the grooves 31 of the coupling body 30 of the tensioning carriage device 200 to be removed from the awning by crossing the coupling body 30 and reaching the profile of the lateral guide 120 (see arrows W). Figure 10 shows how the water W that falls on the tarpaulin 110 falls to a channel 106 existing in the profile that forms the load bar 100 of the awning to subsequently cross the grooves 31 of the coupling body 30 to which said load bar 100 of the awning is attached. Figure 3 shows how the water W that crosses the grooves 31 from the channel 106 of the profile of the load bar 100 reaches the tensioning carriage device 200 and therefore the lateral movement guide 120, to be removed from the awning, as shown in Figure 13 (arrow W).

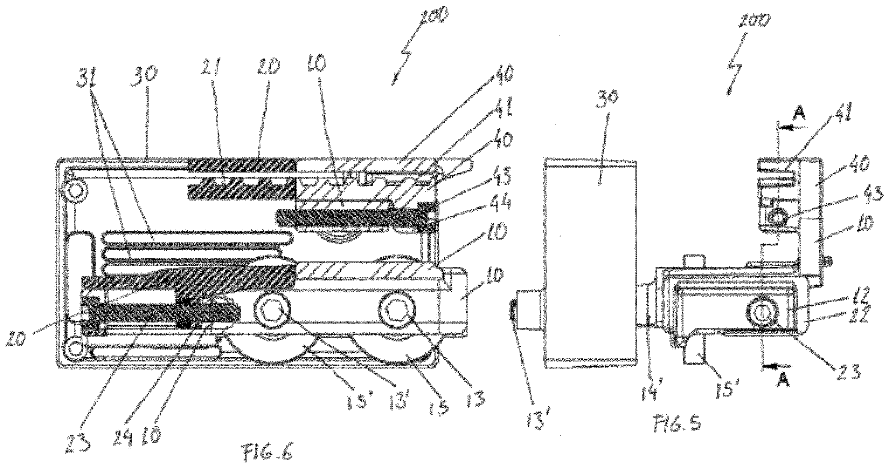

Figure 5 shows a side view of the mounted tensioning carriage device assembly 200, and Figure 6 shows a cross section according to the AA cut of Figure 5. Said cross section shows how the first movable support body 20 interferes with the base support body 10 via the element 24 of the movable support body 20 that acts together with the screw 23, an intermediate square nut fastened to the wall 24 and a nut in one end to ensure the position between both support bodies 10, 20. Thus, when rotating the screw 23, the first movable body 20 moves along said screw 23. Likewise, the interference between the second movable body 40 and the base support body 10 due to the wall 44 is shown. In this case, the securing screw 43 crosses the second movable body 40 through the wall and is threaded on the base support body 10. When rotating the screw 43, the second movable body 40 is moved with respect to the base support body 10.

The cross section of the tensioning carriage device 200 shows the grooves 21, 41 of the first and second movable support bodies 20, 40 and they have teeth to which the teeth of the toothed belt 150 are coupled, preferably exterting light pressure or making the belt tense for the insertion thereof into the grooves 21, 42 and subsequently freeing the same from said tensioning. The tensioning carriage device 200 is inserted into the profile 120 that forms the lateral guide 120, which has an internal configuration in the profile that enables the adjusted insertion of the tensioning carriage device 200. In particular, it has a vertical wall 121 that is adjusted by the outer face of the grooves 21, 41, thus preventing the toothed belt 150 from coming out of said grooves 21, 41. Likewise, there is a housing 122 inside the profile 120 of the lateral guide 120 into which the lateral retention means 123 of the tarpaulin 110 will be inserted. This can be observed in Figure 13.

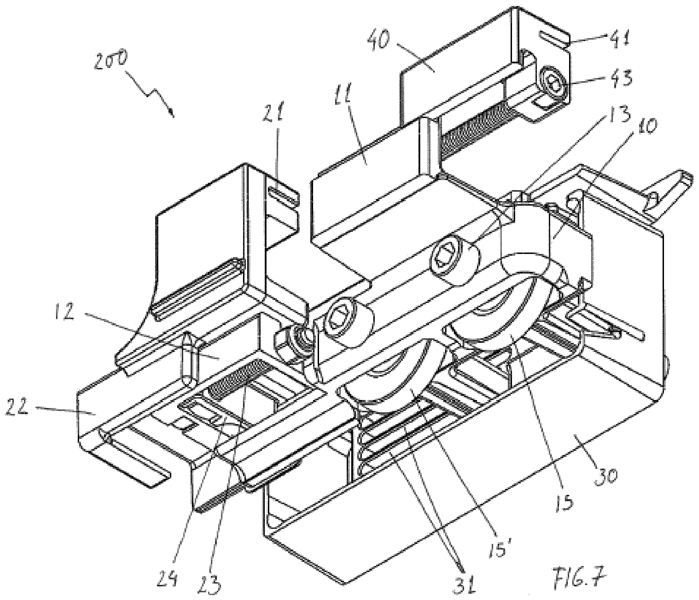

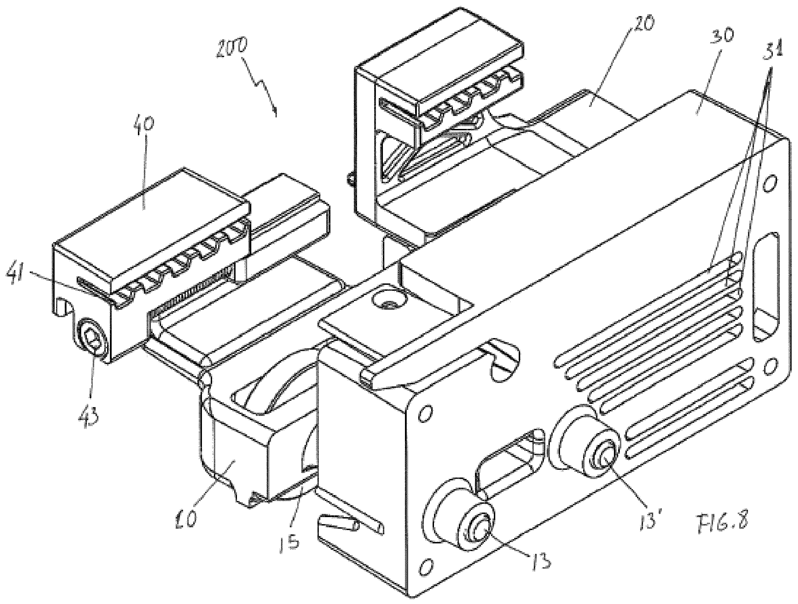

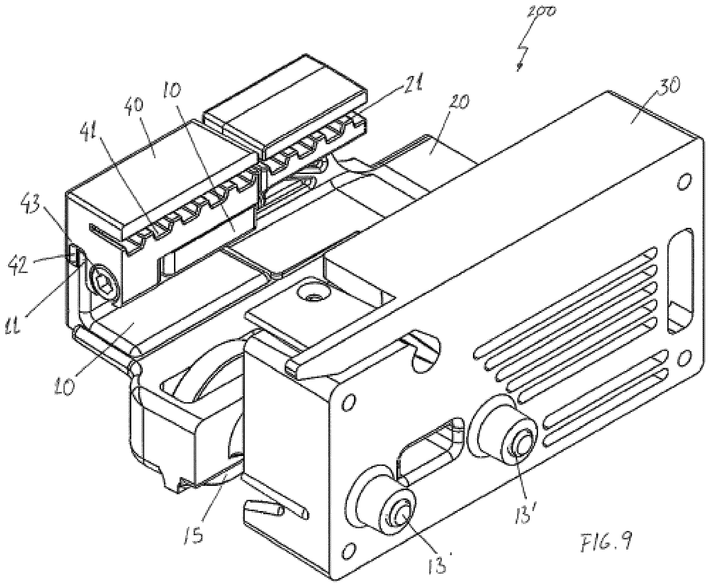

Figures 7 to 10 show different perspective views of a tensioning carriage device 200 in which the different elements that make it up are shown. Figures 7 and 8 show the movable support bodies 20, 40 separated, which would lead the toothed belt 150 to become slack (not shown), while Figure 9 shows both movable support bodies 20, 40 together, which leads to the maximum tensioning of the toothed belt 150 (not shown).

Figure 10, as mentioned above, shows a cross section of the profile that forms the bar of the awning 100 and to which the coupling body 30 of the tensioning carriage device 200 is attached. Said profile of the load bar 100 of the awning incorporates attachment means 105 of the tarpaulin 110 that moves along the lateral guides 120. The tarpaulin 110 is attached by the end thereof opposite the end of the load bar 100 to the motor-driven rolling shaft 130 that is responsible for retracting or extending the tarpaulin 110 of the awning.

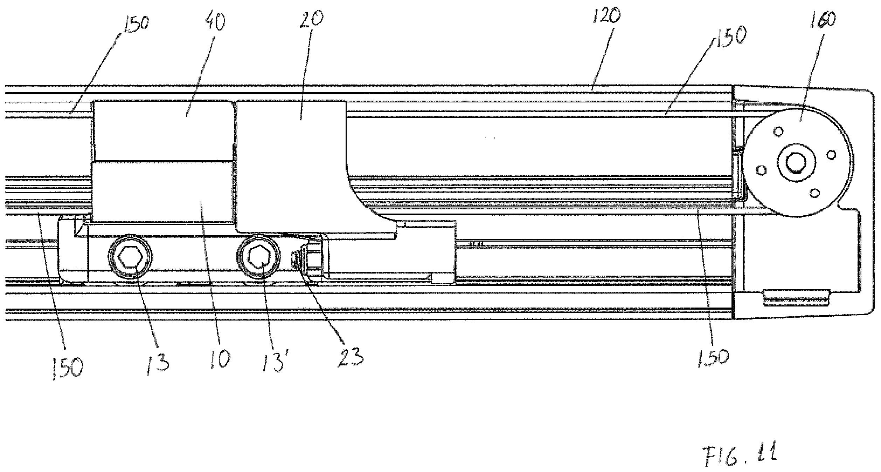

Figure 11 shows a side view of a tensioning carriage device 200 installed in a lateral guide 120 of an awning. This figure shows how the toothed belt 150 surrounds the toothed pulley 160 located on one end of the lateral guide 120, such that one of the sides of the belt 150, the side which comes out of the lower part of the pulley 160, passes under the guides 21, 41 of the movable support bodies 20, 40 and the other side of the belt 150, which comes out of the upper part of the pulley 160, crosses and is attached to the guides 21, 41. It is also shown how the height of the tensioning carriage device 200 is practically the same as the height of the inside of the lateral guide 120, thus reducing the interplay of the tensioning carriage device 200 inside the lateral guide 120. In this example, the pulley 160 is located in the upper half of the guide 120 but it can be arranged in the lower part thereof, for which it would be necessary to invert the tensioning carriage device 200 and include means that ensure the contact of the wheels of the tensioning carriage device 200 with the upper part of the guide 120.

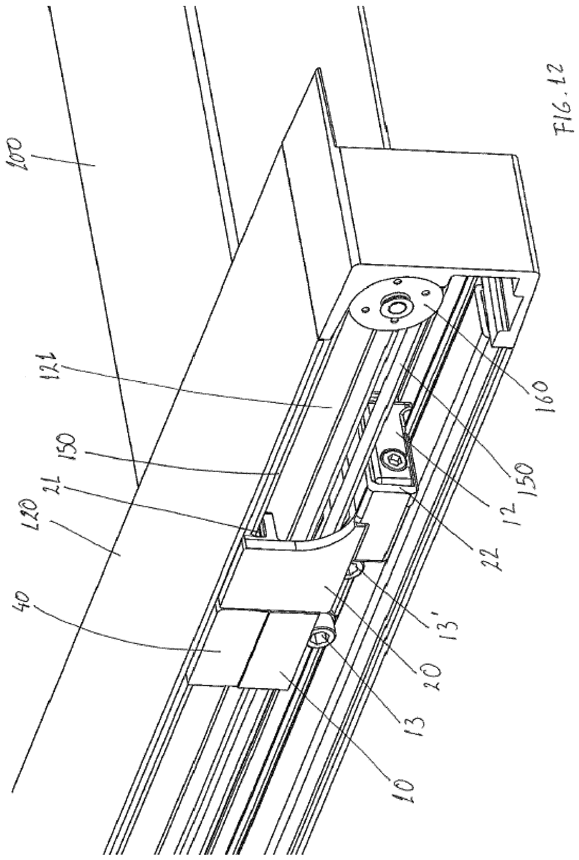

Figure 12 shows a perspective view of a tensioning carriage device 200 in one of the lateral guides 120 of the awning, showing how the bar of the awning 100 is at the same height as the tensioning carriage device 200 due to the fact that said bar is coupled to the coupling body 30 to which the base support body 10 of the tensioning carriage device 200 is secured. Likewise, it shows the toothed belt 15 entering the guide 21 of the first movable support body 20 and how the inner wall 121 of the profile 120 of the lateral guide 120 is near the groove 21 of the first movable body 20, and by extension, to the groove 41 of the first movable body 40 to prevent the toothed belt from coming out of said grooves 21, 41.

## Claims

1. A tensioning carriage device for moving a tarpaulin of an awning along the lateral guide of a pergola, **characterized in that** it comprises:
- a base support body (10) with first guide and support means (12) in one end of the base body (10) and second guide and support means (11) in one side of said base body (10), also having at least one transverse shaft (14, 14') for at least one wheel (15, 15') that moves inside the lateral guide,
- A first movable support body (20), that can be moved with respect to the base support body (10), with a first groove (21) to house the belt and with guide means (22), complementary to the guide means (12) of the base support body (10),
- A second movable support body (40), that can be moved with respect to the base support body (10), with a second groove (31) to house the belt and with guide means (42) that are complementary to the guide means (11) of the base support body (10), this second groove (42) being at the same height with respect to the transverse shaft (14, 14') of the base body (10) as the first movable groove (21) of the first movable support body (21),
- Securing means (23) arranged between the base support body (10) and the second movable support body (20) and securing means (43) arranged between the base support body (10) and the second movable support body (40), and
- A coupling body (30) on which the base support body (10) is secured.

2. The device according to claim 1, **characterized in that** it comprises two transverse shafts (14, 14') to place one wheel (15, 15') in each one.

3. The device according to claim 1, **characterized in that** the securing means (23, 43) of the first and second movable support body (20, 40) to the base support body (10) are screws (23, 43) that enable the distance between the movable support bodies (20, 40) and the base support body (10) to be adjusted.

4. The device according to preceding claims, **characterized in that** the wheel (15, 15') is secured to the transverse shaft (14, 14') of the base support body (10) by means of a securing means (13, 13') that is also used as a joint between the base support body (10) and the coupling body (30).

5. The device according to claim 1, **characterized in that** the coupling body (30) comprises grooves (31) for removing water that falls on the tarpaulin of the awning.

6. A movement system of an awning along two lateral guides (120) of a pergol, **characterized in that** it comprises:
- At least one tensioning carriage device (200), according to claims 1 to 5, inside each guide (120),
- At least one shaft of an awning with a tarpaulin tensioning system (100),
- At least one bar of an awning (100) connected to said tensioning carriage devices (200),
- One lateral movement guide (120) for each carriage device (200), and
- A toothed belt (150) in each guide (120) and connected to each carriage device (200).

7. The system according to claim 7, **characterized in that** the lateral guide (120) is formed from a profile (120) comprising at least one wall (121) that is located next to the guides (21, 41) of the movable support bodies (20, 40), preventing the toothed belt (150) from coming out of said grooves (21, 41).
